# EUROPÄISCHE PATENTSCHRIFT

(11) **EP 1 517 063 B1**
(45) Veröffentlichungstag und Bekanntmachung des Hinweises auf die Patenterteilung: **05.07.2006**
(21) Anmeldenummer: 04015378.5
(22) Anmeldetag: 30.06.2004
(51) Int. Cl.: F16F 1/38

(54) **Buchse, insbesondere Fahrwerksbuchse, mit integriertem Drehwinkelgeber**
Bushing, particularly for a vehicle chassis, with an integrated rotation sensor
Palier notamment pour chassis de véhicules avec un capteur de rotation intégré

(30) Priorität: 18.09.2003 DE 10343588
(43) Veröffentlichungstag der Anmeldung: 23.03.2005
(73) Patentinhaber: Carl Freudenberg KG, 69465 Weinheim (DE)
(72) Erfinder: Pohl, Heiko, 21073 Hamburg (DE)

(56) Entgegenhaltungen:
- EP-A- 0 784 163
- DE-A- 10 134 259
- DE-A- 10 161 671
- DE-C- 19 733 719

## Beschreibung

Die Erfindung betrifft eine Buchsenanordnung, umfassend eine Buchse, insbesondere Fahrwerksbuchse, bestehend wenigstens aus:
- einem Kern aus Metall oder Kunststoff; sowie einem Elastomerkörper, der um den Kern herum angeordnet ist und dabei haftend mit dem Kern verbunden ist.

Buchsenanordnungen und Buchsen finden im Fahrzeugbau eine breite Anwendung, wobei nun auf folgenden Stand der Technik näher eingegangen wird. Fahrwerksbuchsen dienen dazu, Bauteile miteinander zu verbinden, Kräfte und Momente weiterzuleiten, Verschiebungen und Verdrehungen zuzulassen sowie Geräusche und Schwingungen zu dämpfen. Diesbezüglich wird beispielhaft auf die Offenlegungsschrift DE 199 31 079 A1 verwiesen.

Aus der Offenlegungsschrift DE 197 52 635 A1 ist ferner bekannt, Lagerbuchsen, dessen Elastomerkörper mit einem Paar Hohlräume versehen ist, mit einem System von Elektromagneten und einer Steuerungseinheit zu kombinieren. Dabei führt die Steuerungseinheit den Elektromagneten wahlweise solche Ströme zu, dass der Elastomerkörper innerhalb des Halters auf einen jeweils vorbestimmten Winkel verdreht wird. In Richtung einer einwirkenden Kraft wirken dann aufgrund der unterschiedlich verdrehten Hohlräume im Elastomerkörper verschiedene Elastizitätskräfte in Richtung der Kraft.

Aus der EP 0 784 163 A1 ist ein magnetorheologisches Elastomer für eine Buchse mit veränderlicher Steifigkeit bekannt. In dem magnetorheologischen Elastomer sind magnetisierbare Teilchen eingebettet, wobei die magnetisierbaren Teilchen in einem Magnetfeld bleibend ausgerichtet werden. Die vorbekannte Buchse umfasst einen Kern sowie einen Elastomerkörper, der um den Kern herum angeordnet ist und dabei haftend mit dem Kern verbunden ist, wobei in dem Elastomerkörper magnetisierbare Materialteilchen eingebettet und ausgerichtet sind.
Die Buchse gelangt in Federungslenkern von Kraftfahrzeugen zur Anwendung und die Steifigkeit der Buchse soll mittels vorgegebener elektrischer Stromeingabewerte über einen weiten Bereich von Werten steuerbar sein.

Wie im Folgenden dargelegt wird, kommen auf Buchsen, insbesondere Fahrwerksbuchsen, neue Anforderungen zu, die einer Lösung bedürfen.

Moderne Automobile müssen zunehmend mit Leuchtweitenregelungen ausgestattet werden, um die Beleuchtung in Abhängigkeit von der Beladung zu regeln. Dazu werden an den Querlenkern der Hinterachse Drehwinkelgeber montiert. Diese separaten Drehwinkelgeber erzeugen allerdings erhebliche Kosten durch die Montage und benötigen zudem Bauraum der Hinterachse eines Automobils.

Die Aufgabe der Erfindung besteht nun darin, eine Buchsenanordnung bereitzustellen, die im Rahmen der Leuchtweitenregelung so gestaltet ist, dass unter dem Aspekt der Montageerleichterung und Bauraumreduzierung ein separater Drehwinkelgeber entbehrlich ist. Dabei soll das Konzept für eine Vielzahl von Buchsenkonstruktionen innerhalb des gattungsgemäßen Grundaufbaus anwendbar sein.

Gelöst wird diese Aufgabe dadurch, dass in dem Elastomerkörper oder in einer zusätzlichen Polymermatrix, insbesondere Elastomermatrix, detektierbare Materialteilchen eingebettet sind, die als Drehwinkelgeber dienen, der wiederum mit einem Drehwinkelaufnehmer kombiniert ist, so daß mit dessen Hilfe Winkeländerungen innerhalb der Buchse detektiert und als Signal der Leuchtweitenregelung zur Verfügung gestellt werden.
Eine besonders vorteilhafte Ausgestaltung der Erfindung beruht darin, dass die detektierbaren Materialteilchen mit dem Kern einen festhaftenden Verbund eingehen und dabei magnetische Felder auf dem Kern bilden, wobei die Winkeländerungen innerhalb der Buchse über die Anzahl der Pole detektiert werden. Die diesbezüglichen Materialteilchen sind vorzugsweise Stabmagnete oder magnetisierte Ferritpartkel.
Die Erfindung wird nun anhand von Ausführungsbeispielen unter Bezugnahme auf schematische Zeichnungen erläutert. Es zeigen:
- Fig. 1: eine konventionelle Buchse;
- Fig. 2: eine Buchse mit Nieren;
- Fig. 3: eine Buchse mit konturiertem Kern;
- Fig. 4: eine geschlitzte Buchse;
- Fig. 5: eine Buchse ohne Hülse;
- Fig. 6: eine Buchse mit Zwischenblech;
- Fig. 7: eine Kragenbuchse;
- Fig. 8: einen Buchsenkern, umfassend magnetische Felder mit wechselnden Polen;
- Fig. 9: eine Buchsenanordnung eines Fahrwerkes.

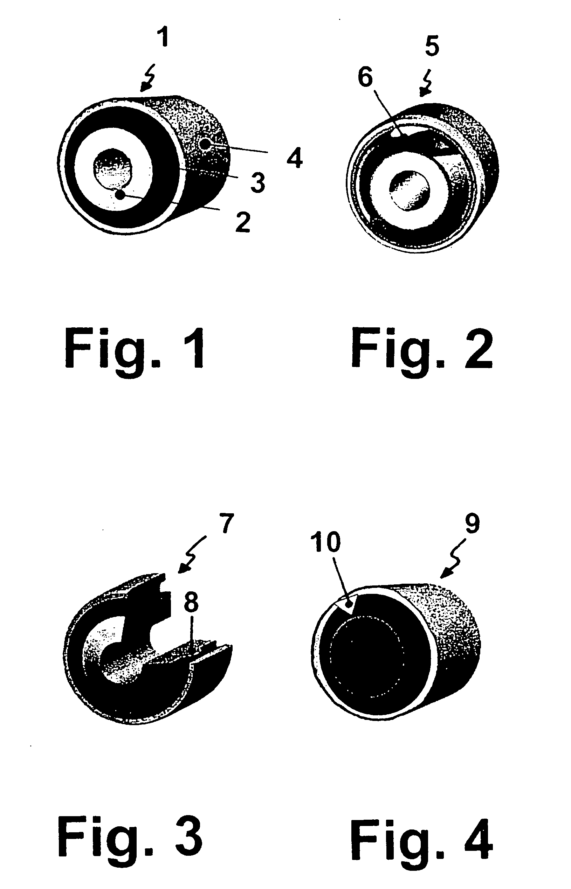

Die Buchsen gemäß Fig. 1 bis 7 sind übliche Fahrwerksbuchsen, die nun mit einem integrierten Drehwinkelgeber ausgestattet werden.

Fig. 1 zeigt eine konventionelle Buchse **1**, bestehend aus einem zylindrischen Kern **2**, der rohrförmig ausgebildet ist, einer Hülse **3** und einem Elastomerkörper **4**, der zwischen Kern und Hülse angeordnet ist. Der Kern und die Hülse bestehen zumeist aus Metall, insbesondere aus Stahl oder Aluminium. Auch entsprechende Kunststoffe (z.B. auf Basis von Polyphenylenether; Vestoran® der Firma Hüls) kommen zum Einsatz. Der Elastomerkörper ist zumeist eine vulkanisierte Kautschukmischung auf der Basis von Natur- oder eines Synthesekautschuks, beispielsweise in Form von Silikon-Kautschuk (DE 44 22 048 A1). Die Haftung des Elastomerkörpers mit dem Kern und der Hülse erfolgt dabei über den Weg der Vulkanisation.

Die Fig. 2 bis 4 zeigen bei dem gleichen Kern-Hülsen-Konzept eine Buchse **5** mit Nieren **6** (Fig. 2), eine Buchse 7 mit bauchiger Kontur **8** des Kerns (Fig. 3) sowie eine Buchse **9** mit Schlitz **10** (Fig. 4).

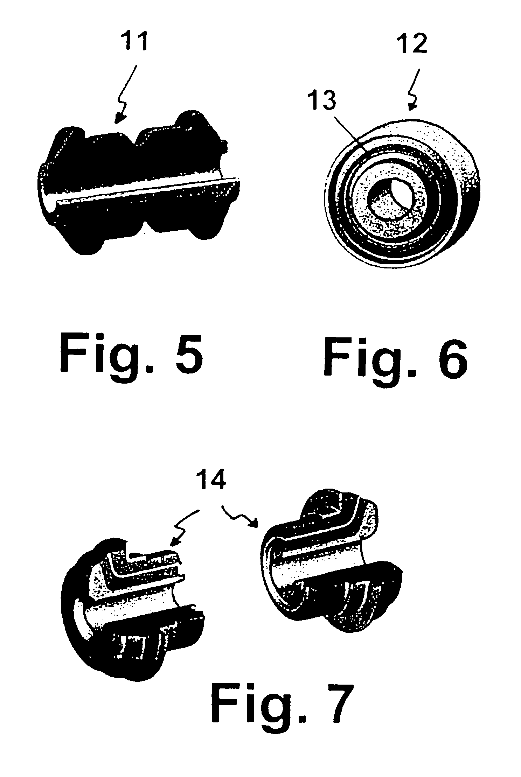

Neben den klassischen Buchsen gemäß Fig. 1 bis 4 werden ferner Buchsen **11** ohne Hülse (Fig. 5), Buchsen **12** mit wenigstens einem Zwischenblech in Form eines Schichtfederkonzeptes (Fig. 6) und Kragenbuchsen **14** (Fig. 7) verwendet. Des Weiteren kommen Buchsen mit einer Gleitschicht zwischen dem Kern und/oder der Hülse und dem Elastomerkörper vor.

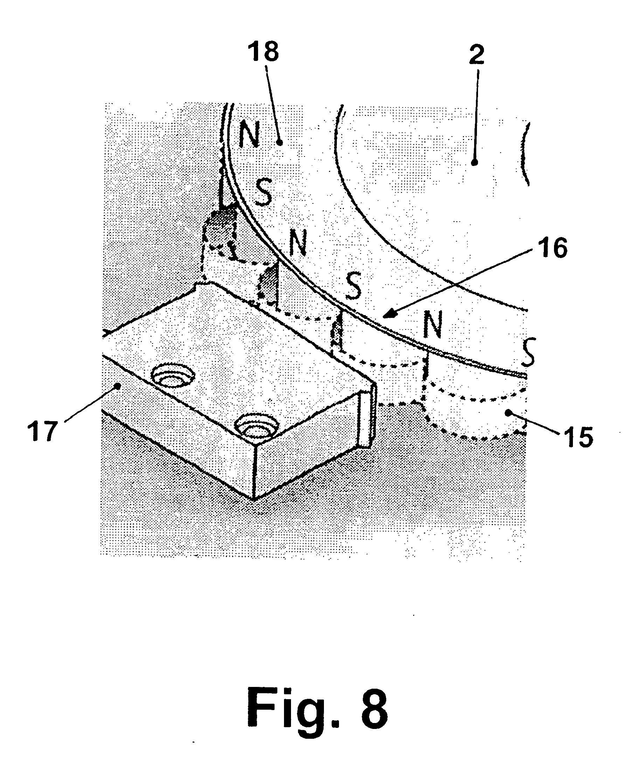

Fig. 8 zeigt einen Kern **2** einer Buchse, die mit einem integrierten Drehwinkelgeber **16** versehen ist. Die detektierbaren Materialteilchen sind Ferritpartikel, die vorzugsweise in einer Elastomermatrix **18** eingebettet sind. Diese Matrix wird auf den Kern **2** vulkanisiert, wodurch sich eine festhaftende Verbindung bildet. Anschließend wird magnetisiert, so dass magnetische Felder **15** mit wechselnden Polen (N, S) auf dem Kern entstehen. Diese magnetischen Felder dienen als Drehwinkelgeber **16**. Änderungen des Winkels zwischen Kern und der Hülse werden nun durch den Drehwinkelaufnehmer **17** über die Anzahl der Pole detektiert und als Signal der Leuchtweitenregelung zur Verfügung gestellt.

Dieser modifizierte Kern mit integriertem Drehwinkelgeber ist wiederum festhaftend mit dem Elastomerkörper verbunden, üblicherweise durch Vulkanisation der entsprechenden Kautschukmischung.

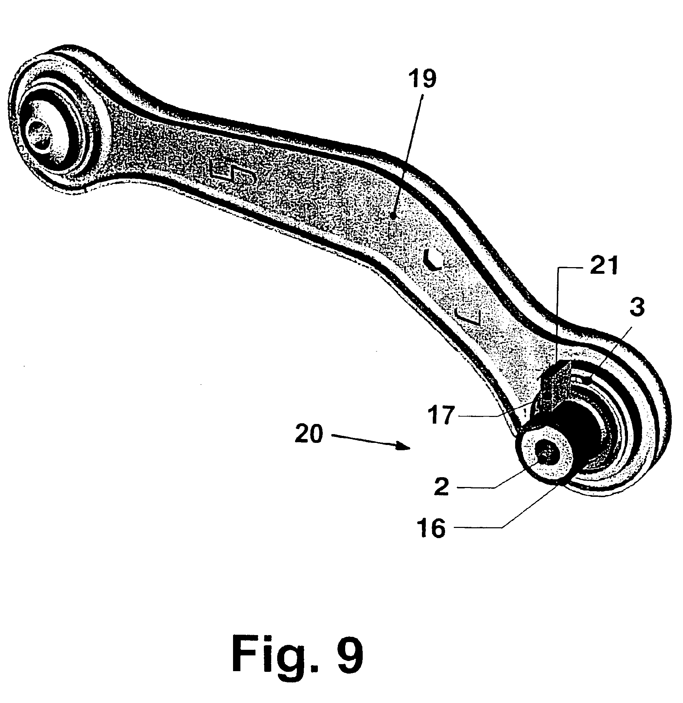

Fig. 9 zeigt ein Fahrwerksteil mit einer Strebe **19** sowie zwei Buchsenaufnahmen, in der jeweils eine Buchse einsitzt. Die Fahrwerksbuchse **20** umfasst einen Kern **2**, eine Hülse **3**, einen Drehwinkelgeber **16** sowie einen mit der Hülse verbundenen Drehwinkelaufnehmer **17** mit Signalkabel **21** für die Leuchtweitenregelung.

Durch die bevorzugte Einbettung der detektierbaren Materialteilchen in einer zusätzlichen Matrix, auch codierte Matrix genannt, können die bisher verwendeten elastomeren Werkstoffe für den Elastomerkörper weiterhin verwendet werden, wobei diesbezüglich ein breites Werkstoffspektrum zur Verfügung steht. Außerdem ist eine derartige Buchse mit integriertem Drehwinkelgeber einfach und kostengünstig herzustellen.

Werden die detektierbaren Materialteilchen innerhalb des Elastomerkörpers eingebettet, was möglich ist, so ist darauf zu achten, dass die Funktionsfähigkeit der Buchse, beispielsweise im Rahmen der Geräusche- und Schwingungsdämpfung, nicht beeinträchtigt wird. Die detektierbaren Teilchen werden auch hier bevorzugt in einer zusätzlichen Polymermatrix, insbesondere Elastomermatrix, eingebettet. Diese codierte Matrix wird dann in den Elastomerkörper integriert.

Der integrierte Drehwinkelgeber kann sich über die gesamte Längsrichtung der Buchse erstrecken oder vorzugsweise nur in dem Buchsenbereich vorhanden sein, wo der Drehwinkelaufnehmer im Wesentlichen wirkt, was in den Ausführungsbeispielen gemäß Fig. 8 und 9 verdeutlicht wird.

### Bezugszeichenliste

- **1**: konventionelle Buchse
- **2**: Kern
- **3**: Hülse
- **4**: Elastomerkörper (elastisches Polster)
- **5**: Buchse mit Nieren
- **6**: Nieren
- **7**: Buchse mit konturiertem Kern
- **8**: konturierter Kern
- **9**: Buchse mit Schlitz
- **10**: Schlitz
- **11**: Buchse ohne Hülse
- **12**: Buchse mit Zwischenblech
- **13**: Zwischenblech
- **14**: Kragenbuchsen
- **15**: magnetische Felder
- **16**: Drehwinkelgeber
- **17**: Drehwinkelaufnehmer (Detektor, Sensor)
- **18**: Polymermatrix, insbesondere Elastomermatrix
- **19**: Strebe
- **20**: Fahrwerksbuchse
- **21**: Signalkabel
- N: magnetischer Nordpol
- S: magnetischer Südpol

## Patentansprüche

1. Buchsenanordnung, umfassend eine Buchse (1, 5, 7, 9, 11, 12, 14, 20), insbesondere Fahrwerksbuchse, bestehend wenigstens aus:
- einem Kern (2) aus Metall oder Kunststoff; sowie
- einem Elastomerkörper (4), der um den Kern (2) herum angeordnet ist und dabei haftend mit dem Kern verbunden ist;
**dadurch gekennzeichnet, dass**
- in dem Elastomerkörper (4) oder in einer zusätzlichen Polymermatrix (18), insbesondere Elastomermatrix, detektierbare Materialteilchen eingebettet sind, die als Drehwinkelgeber (16) dienen, der wiederum mit einem Drehwinkelaufnehmer (17) kombiniert ist, so daß mit dessen Hilfe Winkeländerungen innerhalb der Buchse detektiert und als Signal der Leuchtweitenregelung zur Verfügung gestellt werden.

2. Buchsenanordnung nach Anspruch 1, **dadurch gekennzeichnet, dass** die detektierbaren Teilchen mit dem Kern (2) einen festhaftenden Verbund bilden.

3. Buchsenanordnung nach Anspruch 2, **dadurch gekennzeichnet, dass** die haftende Verbindung zwischen den detektierbaren Materialteilchen und dem Kern (2) durch Vulkanisation erfolgt.

4. Buchsenanordnung nach einem der Ansprüche 1 bis 3, **dadurch gekennzeichnet, dass** die detektierbaren Materialteilchen magnetische Felder (15) mit wechselnden Polen (N, S) bilden, wobei die Winkeländerungen innerhalb der Buchse über die Anzahl der Pole detektiert werden.

5. Buchsenanordnung nach Anspruch 4 in Verbindung mit Anspruch 2 oder 3, **dadurch gekennzeichnet, dass** die detektierbaren Teilchen magnetische Felder (15) mit wechselnden Polen (N, S) auf dem Kern (2) bilden.

6. Buchsenanordnung nach Anspruch 4 oder 5, **dadurch gekennzeichnet, dass** die detektierbaren Materialteilchen Stabmagnete sind.

7. Buchsenanordnung nach Anspruch 4 oder 5, **dadurch gekennzeichnet, dass** die detektierbaren Materialteilchen magnetisierte Ferritpartikel sind.

8. Buchsenanordnung nach Anspruch 7, **dadurch gekennzeichnet, dass** die Magnetisierung der Ferritpartikel nach der Vulkanisation erfolgt.

9. Buchsenanordnung nach einem der Ansprüche 1 bis 8, **dadurch gekennzeichnet, dass** diese zusätzlich eine Hülse (3) aus Metall oder Kunststoff umfasst, die den Elastomerkörper (4) haftend umgibt.

10. Buchsenanordung nach Anspruch 9, **dadurch gekennzeichnet, dass** der Drehwinkelaufnehmer (17) mit der Hülse (3) verbunden ist.

11. Buchsenanordnung nach einem der Ansprüche 1 bis 10, **dadurch gekennzeichnet, dass** sich der Drehwinkelgeber (16) über die gesamte Längsrichtung der Buchse erstreckt oder vorzugsweise nur in dem Buchsenbereich vorhanden ist, wo der Drehwinkelaufnehmer (17) im Wesentlichen wirkt.

## Claims

1. Bush arrangement, comprising a bush (1, 5, 7, 9, 11, 12, 14, 20), in particular a chassis bush, comprising at least:
- a core (2) composed of metal or plastic; and
- an elastomer body (4), which is arranged around the core (2) and is in this case connected to the core such that it adheres to it;
**characterized in that**
- detectable material particles are embedded in the elastomer body (4) or in an additional polymer matrix (18), in particular an elastomer matrix, and are used as a rotation angle sensor (16) which is in turn combined with a rotation angle pick-up (17), with whose aid angle changes within the bush are detected and are made available as a signal for unobstructed width control.

2. Bush arrangement according to Claim 1, **characterized in that** the detectable particles form a firmly-adhering composite with the core (2).

3. Bush arrangement according to Claim 2, **characterized in that** the adhering connection between the detectable material particles and the core (2) is produced by vulcanization.

4. Bush arrangement according to one of Claims 1 to 3, **characterized in that** the detectable material particles form magnetic fields (15) with alternating poles (N, S), with the angle changes within the bush being detected via the number of poles.

5. Bush arrangement according to Claim 4 in conjunction with Claim 2 or 3, **characterized in that** the detectable particles form magnetic fields (15) with alternating poles (N, S) on the core (2).

6. Bush arrangement according to Claim 4 or 5, **characterized in that** the detectable material particles are bar magnets.

7. Bush arrangement according to Claim 4 or 5, **characterized in that** the detectable material particles are magnetized ferrite particles.

8. Bush arrangement according to Claim 7, **characterized in that** the ferrite particles are magnetized after the vulcanization process.

9. Bush arrangement according to one of Claims 1 to 8, **characterized in that** the bush arrangement additionally has a sleeve (3) composed of metal or plastic, which surrounds the elastomer body (4) such that it adheres to it.

10. Bush arrangement according to Claim 9, **characterized in that** the rotation angle pick-up (17) is connected to the sleeve (3).

11. Bush arrangement according to one of Claims 1 to 10, **characterized in that** the rotation angle sensor (16) extends over the entire longitudinal direction of the bush, or is preferably provided only **in that** bush area where the rotation angle pick-up (17) essentially acts.

## Revendications

1. Agencement de douille qui comprend une douille (1, 5, 7, 9, 11, 14, 20), en particulier une douille pour train de roulement, constitué d'au moins :
- une âme (2) en métal ou en matière synthétique et
- un corps en élastomère (4) disposé autour de l'âme (2) et relié à l'âme par adhérence,
**caractérisé en ce que**
- des particules de matière détectable qui servent de détecteur (16) d'angle de rotation qui lui-même est combiné à un enregistreur (17) d'angle de rotation à l'aide duquel les modifications angulaires à l'intérieur de la douille sont détectées et sont délivrées comme signal de régulation de la portée d'éclairage, sont incorporées dans le corps en élastomère (4) ou dans une matrice polymère (18) supplémentaire, en particulier une matrice en élastomère.

2. Agencement de douille selon la revendication 1, **caractérisé en ce que** les particules détectables forment un composite qui adhère fixement à l'âme (2).

3. Agencement de douille selon la revendication 2, **caractérisé en ce que** la liaison par adhérence entre les particules métalliques détectables et l'âme (2) est réalisée par vulcanisation.

4. Agencement de douille selon l'une des revendications 1 à 3, **caractérisé en ce que** les particules métalliques détectables forment des champs magnétiques (15) à pôles (N, S) alternés, les modifications angulaires à l'intérieur de la douille étant détectées par l'intermédiaire du nombre des pôles.

5. Agencement de douille selon la revendication 4 en association aux revendications 2 ou 3, **caractérisé en ce que** les particules détectables forment des champs magnétiques (15) à pôles (N, S) alternés sur l'âme (2).

6. Agencement de douille selon les revendications 4 ou 5, **caractérisé en ce que** les particules de matière détectable sont des barreaux aimantés.

7. Agencement de douille selon les revendications 4 ou 5, **caractérisé en ce que** les particules de matière détectable sont des particules de ferrite magnétisée.

8. Agencement de douille selon la revendication 7, **caractérisé en ce que** la magnétisation des particules de ferrite est réalisée après la vulcanisation.

9. Agencement de douille selon l'une des revendications 1 à 8, **caractérisé en ce que** l'agencement comporte en supplément un manchon (3) en métal ou en matière synthétique qui entoure le corps en élastomère (4) et y adhère.

10. Agencement de douille selon la revendication 9, **caractérisé en ce que** l'enregistreur (17) d'angle de rotation est relié au manchon (3).

11. Agencement de douille selon l'une des revendications 1 à 10, **caractérisé en ce que** le détecteur (16) d'angle de rotation s'étend sur toute la longueur de la douille ou de préférence uniquement dans la partie de la douille dans laquelle l'enregistreur (17) d'angle de rotation travaille essentiellement.
